Europäisches Patentamt

European Patent Office

Office européen des brevets

(11) Publication number: **0 390 588**
**A2**

## (12) EUROPEAN PATENT APPLICATION

(21) Application number: **90303436.1**

(22) Date of filing: **30.03.90**

(51) Int. Cl.5: **H04B 1/20**

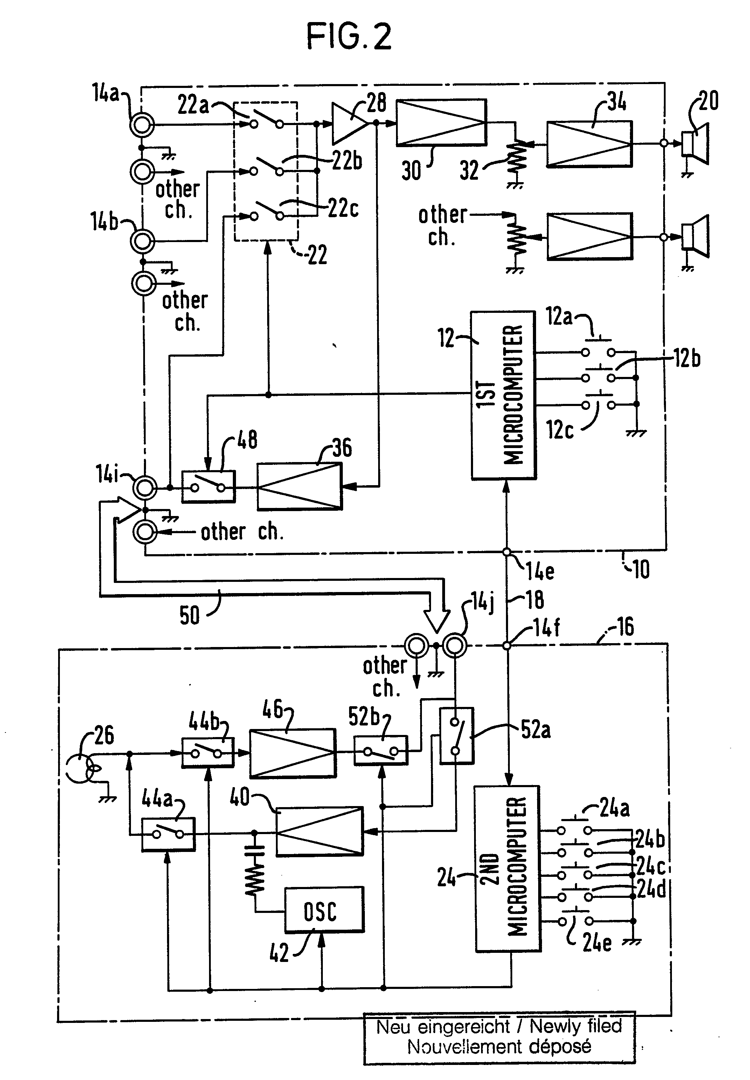

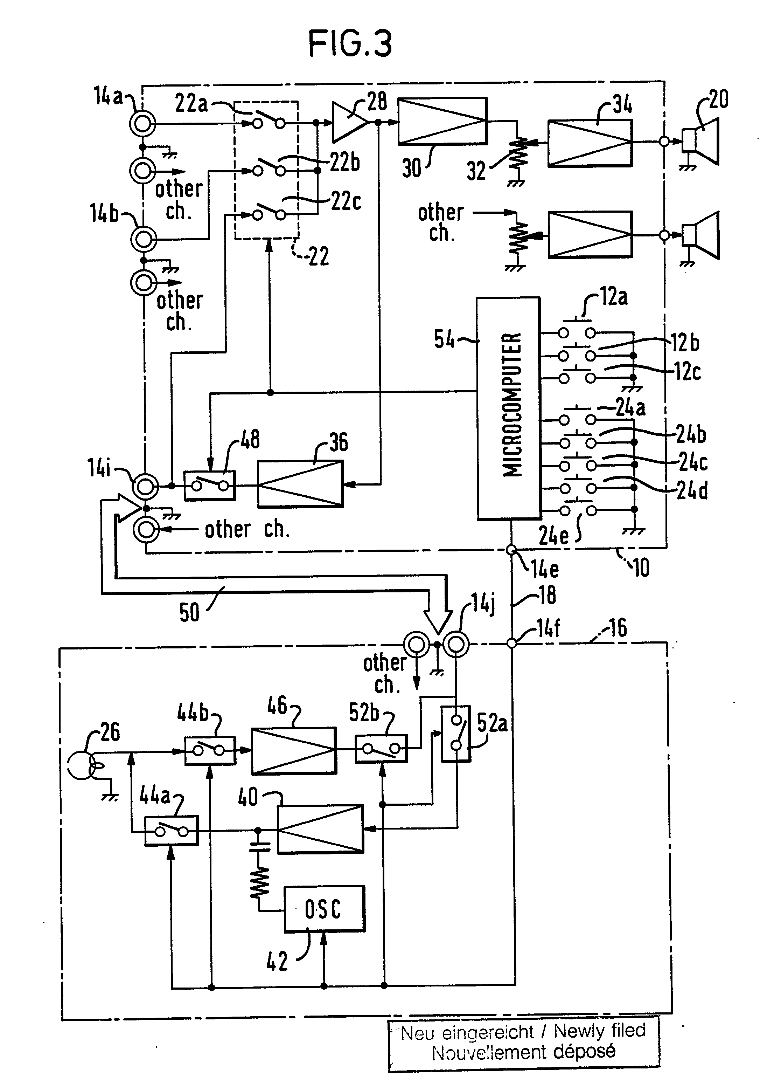

A request for correction of the figures 2 and 3 has been filed pursuant to Rule 88 EPC. A decision on the request will be taken during the proceedings before the Examining Division (Guidelines for Examination in the EPO, A-V, 2.2).

(30) Priority: **31.03.89 JP 81962/89**

(43) Date of publication of application:
**03.10.90 Bulletin 90/40**

(84) Designated Contracting States:
**FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Kimura, Naoki, c/o Intellectual**
**Property Division, Toshiba Corporation, 1-1-1**
**Shibaura, Minato-ku, Tokyo(JP)**

(74) Representative: **Muir, Ian R. et al**
**HASELTINE LAKE & CO. Hazlitt House 28**
**Southampton Buildings Chancery Lane**
**London WC2A 1AT(GB)**

(54) **Input/output switching circuit.**

(57) An input/output switching circuit for passing an electrical signal between a first audio/video unit (10) and a second audio/video unit (16). The input/output switching circuit includes a first terminal (14i) provided on the first audio/video unit (10), a first switch (48) coupled to the first terminal (14i) for controlling access of the electrical signal to and from the first terminal (14i), a second terminal (14j) provided on the second audio/video unit (16), a connection cable (50) coupled between the first (14i) and second (14j) terminals for bidirectionally passing the electrical signal between the first (10) and second (16) audio/video units, a second switch (52a/52b), coupled to the second terminal (14j) for controlling access of the electrical signal to and from the second terminal (14j), a first microcomputer (12) coupled to the first switch (48) for controlling the first switch (48), a second microcomputer (24) coupled to the second switch (52a/52b) for controlling the second switch (52a/52b), a communication line (18) for communicating data including a state of the first switch (48) from the first microcomputer (12) to the second microcomputer (24) and for communicating data including a state of the second switch (52a/52b) from the second microcomputer (24) to the fist microcomputer (12). Wherein the first (12) and the second (24) microcomputers control the first (48) and second (52a/52b) switches in response to the data passed by the communication line (18) to thereby permit bidirectional passing of the electrical signal through the connection cable (50).

## INPUT/OUTPUT SWITCHING CIRCUIT

The present invention relates generally to an apparatus including a record/playback system connected to an amplifying system which selectively amplifies a number of input signals. Specifically, the present invention relates to an input/output switching circuit which connects e.g., audio and video signals of systems and which mutually transmits signals between amplifying systems and record/playback systems.

With the advances in electronic technology in recent years, the control of amplifier units which selectively extract a number of input signals via a function switch and tape deck units which record or play back audio or video cassette tapes is performed by microcomputers. Recently, for instance the amplifier unit and the tape deck unit each have a microcomputer, which recognizes the control mode of the microcomputer of the other unit by mutual exchange of signals. The merit of each unit having its own microcomputer is that, for instance, the speeding-up of processing can be achieved.

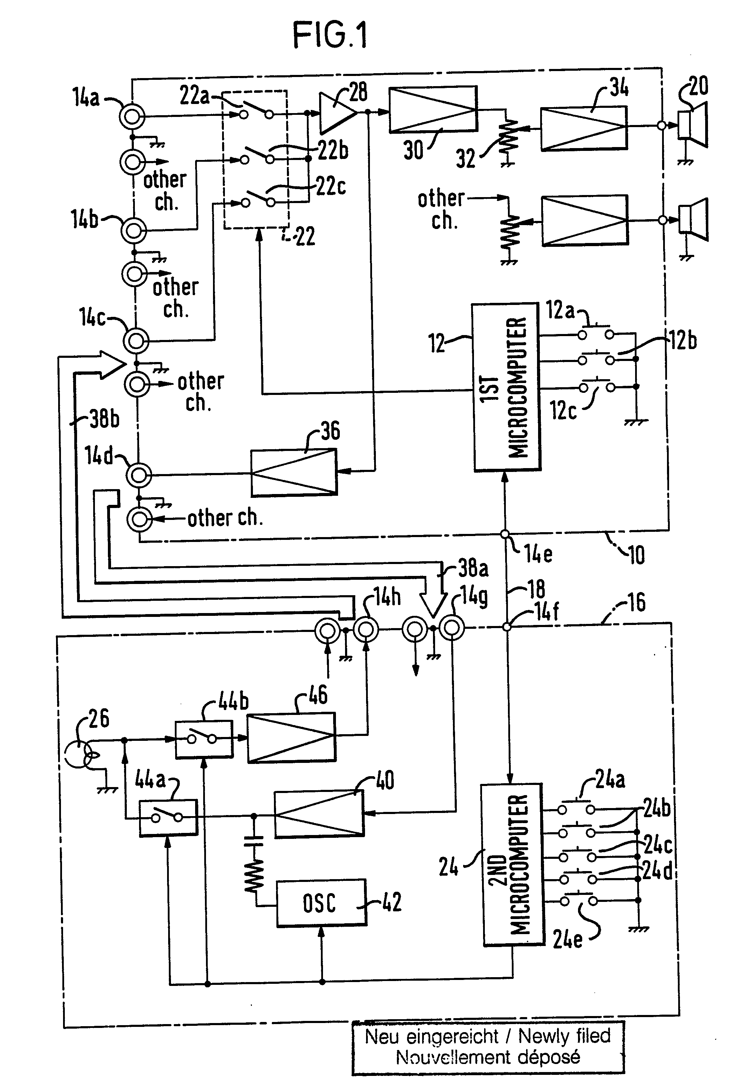

FIGURE 1 shows an example of prior input/output switching circuit known to the applicant in which a microcomputer is provided, in this example, for each of an amplifier unit and a tape deck unit.

An amplifier unit 10 is provided with an amplifier control microcomputer (referred to hereafter as the first microcomputer) 12 for selectively switching the input signals of jacks 14a to 14d. The first microcomputer 12 of the amplifier unit 10 detects and judges the mode of a tape deck unit 16, which is provided with record and playback functions, through the mode of key-switches 12a to 12c.

The tape deck unit 16 passes commands to the first microcomputer 12 through a communication line 18 connected between jacks 14e and 14f, to select output signals to be output through a speaker 20 via an input selector switch (referred to as input selector hereafter) 22. Also, the first microcomputer 12 transmits the switching mode of the input selector 22 to the tape deck unit 16 through the communication line 18 connected between the jacks 14e and 14f.

The tape deck unit 16 is provided with a deck control microcomputer (referred to as second microcomputer hereafter) 24 for controlling a tape drive mechanism (not shown) which drives the cassette tape and for executing the signal selection of a record/playback head 24. The second microcomputer 24 executes control of the cassette mechanism according to the mode of key-switches 24a to 24e, and executes the selection of either recording signals to a record/playback head 26 or the playback of recorded signals. Moreover, the second microcomputer 24 detects and judges the mode of the amplifier unit 10 by signals output from the first microcomputer 12 to the second microcomputer 24 through the communication line 18 between the jacks 14e and 14f.

When the tape deck unit 16 is selected at the amplifier unit 10, the first microcomputer 12 automatically passes appropriate signals to the second microcomputer 24 to put the tape deck unit 16 into the playback mode. When another input is selected at the amplifier unit 10 the microcomputers 12 and 24 automatically put the tape deck unit 16 into the stopped mode. Also, the second microcomputer 24 transmits signals to the amplifier unit 10 through the communication line 18 connected between the jacks 14f and 14e as to the mode of the cassette mechanism (playback, fast forward, rewind, stop, record) in the tape deck unit 16.

When the input key-switch 12a of the first microcomputer 12 is closed, the first microcomputer 12 closes a first switch 22a of the input selector 22, and opens second and third switches 22b and 22c of the input selector 22. Since the first switch 22a is closed input signals from the jack 14a, are transmitted to a buffer 28 through the first switch 22a of the input selector 22. These signals are input to a pre-amplifier 30 from the buffer 28 and are outputted from the speaker 20 via a volume controller 32 and a power amplifier 34. Also, the output of the buffer 28 is transmitted to the tape deck unit 16 through a buffer amplifier 36 as input signals.

Specifically, the output of the buffer amplifier 36 is supplied to the jack 14d and is input to a recording input signal jack 14g of the tape deck unit 16 through a first connection cable 38a. The signal input to the jack 14g are amplified by a recording amplifier 40 and, if the tape deck unit 16 is in the recording mode, are added to a bias signal of a bias oscillator 42 and are then applied as recording signals to the record/playback head 26 via a first head circuit switch 44a which is closed. At this time, the first microcomputer 12 transmits data indicating the closed state of the first switch 22a and the open states of the second and third switches 22b and 22c to the second microcomputer 24 of the tape deck unit 16 through the communication line 18 connected between the jacks 14e and 14f.

Also, when the key-switch 12c of the amplifier unit 10 is closed, the first microcomputer 12 closes the third switch 22c of the input selector 22 and opens the first and second switches 22a and 22b. If the tape deck unit 16 is in the playback mode, played-back signals from the tape, which are input from a jack 14h of the tape deck unit 16 to the jack l4c of the amplifier unit 10 through a second connection cable 38b, are passed through the third switch 22c to the speaker 20. At this time also, the first microcomputer 12 transmits data indicating the closed state of the third switch 22c and the open states of the first and second switches 22a and 22b to the second microcomputer 24.

Thus, if the tape deck unit 16 is in the playback mode, the second microcomputer 24 puts the cassette mechanism into the playback mode according to the data from the first microcomputer 12 and inputs the played-back signals obtained from the record/playback head 26 via a second head circuit switch 44b which is closed and a playback amplifier 46 to the jack 14c. It is thus possible to play back the signals through the speaker 20.

Accordingly, in operation of the above-described system illustrated in FIGURE 1, during the recording mode signals are passed from the amplifier unit 10 to the tape deck unit 16 through the first connection cable 38a connected between the jacks 14d and 14g, while the second connection cable 38b connected between the jacks 14c and 14h is not used. Conversely, during playback, signals are passed from the tape deck unit 16 to the amplifier unit 10 through the second connection cable 38b connected between jacks 14h and 14c, while the first connection cable 38a connected between the jacks 14d and 14g is not used.

As a result, during any operation of the prior art device there is the disadvantage that either one of the connection cables 38a and 38b connected between the amplifier unit 10 and the tape deck unit 16 is wasted.

Although, in the above example, the description is for analog audio signals, the same applies for the digital audio signals of digital audio tape recorders and the video signals of a VTR.

The prior art input/output switching circuit described above cannot operate correctly unless the respective different signal lines are connected to the recording amplifier 40 of the tape deck unit 16 for signals from the amplifier unit 10, and to the input selector 22 of the amplifier unit 10 for playback signals from the tape deck unit 16. In this way, a pair of connection cables for the recording input signals and the playback output signals are required between the tape deck unit 16 and the amplifier unit 10. Therefore, when the number of amplifier units and tape deck units is increased, the number of connection cables will be further increased.

The present invention seeks to provide an improved input/output switching circuit for an amplifier unit and a tape deck unit.

According to the present invention there is provided an input/output switching circuit for passing electrical signals between a first unit and a second unit characterised in that the input/output switching circuit comprises:
first terminal means provided on the first unit;
first switch means coupled to the first terminal means for controlling access of the electrical signal to and from the first terminal means;
second terminal means provided on the second unit;
coupling means between the first and second terminal means for bidirectionally passing electrical signals between the first and second units;
second switch means coupled to the second terminal means for controlling access of the electrical signal to and from the second terminal means;
control means for controlling the first and second switch means;
means for communicating data, including the state of the first switch means to the control means and for communicating data including the state of the second switch means to the control means;
wherein the control means controls the first and second switch means in response to the data communicated by the communicating means to thereby permit bidirectional passing of electrical signals through the coupling means.

For a better understanding of the present invention and many of the attendant advantages thereof reference will now be made, by way of example, to the accompanying drawings, wherein:

Figure 1 is a block diagram showing an input/output switching circuit known to the applicant;

Figure 2 is a block diagram showing a first embodiment of an input/output switching circuit according to the present invention; and

Figure 3 is a block diagram showing a second embodiment of an input/output switching circuit according to the present invention.

The present invention will be described in detail with reference to Figures 2 and 3. In the drawings, reference numerals or letters used in Figure 1 will be used in the other figures to designate like or equivalent elements for simplicity of explanation. Also in the drawings although stereo channel input and output jacks are shown only the circuits for one channel are shown and clearly those circuits would be duplicated as necessary for the other channel.

Figure 2 shows a block diagram of a first embodiment of the input/output switching circuit in which a microcomputer is provided for each of an amplifier unit and a take deck unit.

An amplifier unit 10 is provided with a first microcomputer 12 for selectively switching the input signals of jacks 14a, 14b and 14i. The first microcomputer 12 of the amplifier unit 10 detects and judges the mode of a tape deck unit 16, which is provided with record and playback functions, through the mode of key-switches 12a to 12c. The tape deck unit 16 passes commands to the first microcomputer 12 through a communication line 18 connected between jacks 14e and 14f, to select output signals to be output through a speaker 20 via an input selector 22. Also, the first microcomputer 12 transmits the switching mode of the input selector 22 to the tape deck unit 16 through the communication line 18 connected between the jacks 14e and 14f.

The tape deck unit 16 is provided with a second microcomputer 24 for controlling a tape drive mechanism (not shown) which drives the cassette tape and for executing the signal selection of a record/playback head 24. The second microcomputer 24 executes control of the cassette mechanism according to the mode of key-switches 24a to 24e, and executes the selection of either recording signals to record/playback head 26 or the playback of recorded signals. Moreover, the second microcomputer 24 detects and judges the mode of the amplifier unit 10 by signals output from the first microcomputer 12 to the second microcomputer 24 through the communication line 18 between the jacks 14e and 14f.

When the tape deck unit 16 is selected at the amplifier unit 10, the first microcomputer 12 automatically passes appropriate signals to the second microcomputer 24 to put the tape deck unit 16 into the playback mode. When another input is selected at the amplifier unit 10 the microcomputers 12 and 24 automatically put the tape deck unit 16 into the stopped mode. Also, the second microcomputer 24 transmits signals to the amplifier unit 10 through the communication line 18 connected between the jacks 14f and 14e as to the mode of the cassette mechanism (playback, fast forward, rewind, stop, record) in the tape deck unit 16.

When the input key-switch 12a of the first microcomputer 12 is closed, the first microcomputer 12 closes a first switch 22a of the input selector 22, and opens second and third switches 22b and 22c of the input selector 22. Since the first switch 22a is closed input signals from the jack 14a, are transmitted to a buffer 28 through the first switch 22a of the input selector 22. These signals are input to a pre-amplifier 30 from the buffer 28 and are outputted from the speaker 20 via a volume controller 32 and a power amplifier 34. Also, the output of the buffer 28 is transmitted to the tape deck unit 16 through a buffer amplifier 36 as input signals.

The output of the buffer amplifier 36 is supplied to a jack 14i through a switch 48 which is controlled by the first microcomputer 12. That is, the jack 14i is provided in place of the jacks 14c and 14d in FIGURE 1 and the switch 48 is newly provided. The jack 14i is further connected to the input of the third switch 22c of the input selector 22. When the third switch 22c is closed by the first microcomputer 12, the switch 48 is open, and vice versa.

Thus, the switch 48 transmits the output of the buffer amplifier 36 to the jack 14i when either one of the first and second switches 22a and 22b is closed and the third switch 22c is open. On the other hand, the jack 14i is connected to the buffer 28 through the third switch 22c, when the third switch 22c is closed and the switch 48 is open. In this state, a signal on the jack 14i, that is, a playback signal obtained in the tape deck unit 16 as described later, is applied to the speaker 20.

The signal applied to the jack 14i from the buffer amplifier 36 through the switch 48 is supplied to the tape deck unit 16 through a common connection cable 50. The common connection cable 50 is connected to a jack 14j which is provided on the tape deck unit 16 in place of the jacks 14g and 14h of FIGURE 1. The signal input to the jack 14 j is supplied to a recording amplifier 40 through a first amplifier circuit switch 52a which is controlled by the second microcomputer 24.

If the tape tape deck unit 16 is in the recording mode, the second microcomputer 24 closes the first amplifier circuit switch 52a and a first head circuit switch 44a. So that the signal supplied to the jack 14i through the common connection cable 50 from the amplifier unit 10 is applied to a record/playback head 26 through the first amplifier circuit switch 52a, the recording amplifier 40 and the first head circuit switch 44a. A bias signal of a bias oscillator 42 is added to the signal amplified by the recording amplifier 40 before it is applied to the record/playback head 26.

At this time, the first microcomputer 12 transmits data indicating the closed state of the first switch 22a and the open states of the second and third switches 22b and 22c to the second microcomputer 24 of the tape deck unit 16 through the communication line 18 connected between the jacks 14e and 14f.

Also, when the key-switch 12c of the amplifier unit 10 is closed, the first microcomputer 12 closes the third switch 22c of the input selector 22 and opens the first and second switches 22a and 22b of the input selector 22 and the switch 48. If the tape deck unit 16 is in the playback mode, played-back signals from the record/playback head 26 is applied to the jack 14j through a second head circuit switch 44b, a playback amplifier 46 and a second amplifier circuit switch 52b. The second head circuit switch 44b and the second amplifier circuit switch 52b are controlled by the second microcomputer 24 in the playback mode. That is, two circuits parallelly connected between the jack 14j and the record/playback head 26c are alternatively activated by the second microcomputer 24.

The playback signal applied to the jack 14j is supplied to the jack l4i of the amplifier unit 10 through the common connection cable 50. The closed states of the second head circuit switch 44b and the second amplifier circuit switch 52b and the open states of the first head circuit switch 44a and the first amplifier circuit switch 52a are recognized by the first microcomputer 12 according to the above-mentioned communication through the communication lie 18. Thus, the first microcomputer 12 closes the third switch 22c of the input selector 22 and opens the switch 48 in the playback mode. Thus, the playback signal transmitted through the common connection cable 50 to the jack 14i of the amplifier unit 10 is applied to the speaker 20.

The first embodiment of the present invention can carry out the mutual transmission of signals between the amplifier unit and the tape deck unit by using the common connection cable. Thus, the construction of the input/output switching circuit according to the present invention is very simple.

As described above, the present invention can provide an extremely advantageous input/output switching circuit.

In a second embodiment of the invention, illustrated in Figure 3, microcomputers 12 and 22 may be replaced by a single microcomputer 54. The single microcomputer 4 can be placed in the amplifier unit 10 as shown in Figure 3, otherwise it is placed in the tape deck unit 16. Either way, the single microcomputer 54 is connected to the other unit through the communication line 18. Further the single microcomputer 54 is coupled to the key-switches 12a to 12c and the key-switches 24a to 24e.

While there have been illustrated and described what are at present considered to be preferred embodiments of the present invention, it will be understood by those skilled in the art that various changes and modifications may be made, and equivalents may be substituted for elements thereof without departing from the true scope of the present invention.

In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example for the purpose of a divisional application.

## Claims

1. An input/output switching circuit for passing electrical signals between a first unit (10) and a second unit (16), characterised in that the input/output switching circuit comprises:
first terminal means (14i) provided on the first unit (10);
first switch means (48), coupled to the first terminal means (14j), for controlling access of the electrical signal to and from the first terminal means (14j);
second terminal means (14j) provided on the second unit (16);
coupling means (50) between the first (14i) and second (14j) terminal means for bidirectionally passing electrical signals between the first (10) and second (16) units;
second switch means (52a/52b), coupled to the second terminal means (14j), for controlling access of the electrical signal to and from the second terminal means (14j);
control means (54) for controlling the first (48) and second (52a/52b) switch means; and
means for communicating data, including the state of the first switch means (48) to the control means (54), and for communicating data including the state of the second switch means (52a/52b) to the control means (54); and
wherein the control means (54) controls the first (48) and second (52a/52b) switch means in response to the data communicated by the communicating means to thereby permit bidirectional passing of electrical signals through the coupling means (50).

2. An input/output switching circuit for passing electrical signals between a first unit (10) and a second unit (16), characterised in that the input/output switching circuit comprises:
first terminal means (14i) provided on the first unit (10);
first switch means (48), coupled to the first terminal (14j), for controlling access of the electrical signal to and from the first terminal (14j);

second terminal means (14j) provided on the second unit (16);

coupling means between the first (14i) and second (14j) terminal means for bidirectionally passing electrical signals between the first (10) and second (16) units;

second switch means (52a/52b), coupled to the second terminal means (14j), for controlling access of the electrical signal to and from the second terminal means (14j);

first control means (12), coupled to the first switch means (48), for controlling the first switch means (48);

second control means (24), coupled to the second switch means (52a/52b), for controlling the second switch means (52a/52b);

means (18) communicating data including a state of the first switch means (48) from the first control means (12) to the second control means (24), and for communicating data including a state of the second switch means (52a/52b) from the second control means (24) to the first control means (12);

wherein the first (12) and second (24) control means control the first (48) and second (52a/52b) switch means in response to the data passed by the communicating means (18) to thereby permit bidirectional passing of the electrical signal through the passing means (50).

3. A circuit according to claim 1 or 2, wherein the first unit comprises an amplifier unit (10).

4. A circuit according to any preceding claim, wherein the second unit comprises a tape deck unit (16).

5. A circuit according to any preceding claim, wherein the first switch means (48) comprises a first switch (48), coupled between the first terminal means (14i) and an output (36) of the first unit (16), and an input selector switch (22), coupled between the first terminal means (14i), and an input (28) of the first unit (16).

6. A circuit according to claim 1, wherein the second switch means comprises second (52a) and third (52b) switches, coupled respectively between the second terminal means (14j) and an input and an output channel of the second unit, the second switch (52a) being closed when the third switch (52b) is open and vice versa.

# FIG.1

FIG.2

Neu eingereicht / Newly filed
Nouvellement déposé

# FIG.3